# FASCICULE DE BREVET EUROPEEN

(11) **EP 2 014 874 B1**
(45) Date de publication et mention de la délivrance du brevet: **16.03.2011**
(21) Numéro de dépôt: 08160249.2
(22) Date de dépôt: 11.07.2008
(51) Int. Cl.: F01D 5/30, F04D 29/34

(54) **Ensemble de rotor de turbomachine**
Laufradeinheit eines Turbotriebwerks
Turbomachine rotor assembly

(30) Priorité: 13.07.2007 FR 0756467
(43) Date de publication de la demande: 14.01.2009
(73) Titulaire: SNECMA, 75015 Paris (FR)
(72) Inventeur: Douguet, Charles, 77870 Vulaines Sur Seine (FR); Jacq, Christophe, 77540 Courpalay (FR); Lombard, Jean-Pierre, 77830 Pamfou (FR)
(74) Mandataire: Besnard, Christophe Laurent

(56) Documents cités:
- EP-A- 0 341 455
- EP-A- 0 495 586
- EP-A- 1 085 172
- WO-A-96/41068
- WO-A-99/64726

## Description

L'invention concerne un ensemble de rotor de turbomachine du type comprenant : un disque de rotor présentant sur sa périphérie extérieure des alvéoles; des aubes fixées par leur pied dans lesdites alvéoles; et des clinquants montés entre les pieds d'aube et le disque, chaque clinquant comprenant deux branches et une base reliant ces branches entre elles, chaque branche étant disposée entre la portée d'un pied d'aube et la portée correspondante du disque.

Elle se destine à tout type de turbomachine, terrestre ou aéronautique (turboréacteur, turbopropulseur, turbine à gaz terrestre, etc.). Dans le cas particulier d'un turboréacteur d'avion double-corps, double-flux, l'invention peut concerner la soufflante (ou "fan"), le compresseur basse pression (ou "booster"), le compresseur haute pression, la turbine haute pression ou la turbine basse pression du turboréacteur.

Dans la présente demande, la direction axiale correspond à la direction de l'axe de rotation A du rotor de la turbomachine, et une direction radiale est une direction perpendiculaire à l'axe A. Par ailleurs, sauf précision contraire, les adjectifs "intérieur" et "extérieur" sont utilisés en référence à une direction radiale de sorte que la partie intérieure (i.e. radialement intérieure) d'un élément est plus proche de l'axe A que la partie extérieure (i.e. radialement extérieure) du même élément.

Dans un ensemble de rotor (i.e. un ensemble solidaire du rotor) du type précité, les aubes (mobiles) sont fixées au disque de rotor par des systèmes d'attache, il peut s'agir d'attache brochée rectiligne ou curviligne, marteau, ou sapin. On peut décrire ces systèmes d'attache comme étant des dispositifs où les pieds d'aube forment les parties mâles du système et sont retenus radialement dans les parties femelles du système, ménagées à la périphérie extérieure du disque et communément dénommées "alvéoles".

Lors de la mise en rotation du rotor, les aubes sont soumises principalement aux efforts centrifuges ainsi qu'aux efforts aérodynamiques axiaux et les pieds d'aube viennent se plaquer en butée contre les parties du disque bordant l'ouverture extérieure des alvéoles, sous l'effet des efforts centrifuges. Les surfaces des pieds d'aube et du disque en butée l'une contre l'autre, sont communément dénommées "portées". Ces portées sont soumises à une pression (résultant desdits efforts, appliqués sur la surface de ces portées). On peut estimer que cette pression dépend en première approximation du carré de la vitesse de rotation du rotor.

On comprend donc que les variations de vitesse de rotation du rotor au cours du cycle de fonctionnement de la turbomachine : de l'arrêt au plein gaz, en passant par les régimes particuliers intermédiaires (ralenti, taxi, croisière, descente, si l'on considère une turbomachine aéronautique) induisent des variations de pression aux niveaux des portées définies précédemment. Ces variations de pressions associées aux déformations élastiques des pièces en contact provoquent des mouvements relatifs entre pied d'aube et disque. Ces mouvements relatifs, appelés glissement ou séparation selon leur nature, induisent des phénomènes d'usure des portées des aubes ou du disque lorsqu'ils sont répétés. On peut également attribuer aux mouvements dynamiques des aubes à un régime de rotation donné (réponses des aubes à des sollicitations alternées de nature harmonique ou transitoire) une contribution dans le phénomène d'usure desdites portées. Or, ces phénomènes d'usure sont pénalisants pour la durée de vie de la turbomachine.

Des solutions dites "anti-usures", c'est-à-dire retardant l'apparition de l'usure aux interfaces de contact, peuvent être adoptées, parmi lesquelles des solutions basées sur l'introduction d'un troisième corps, appelé clinquant, entre les pieds d'aubes et le disque. Ce clinquant permet, notamment, de doubler les interfaces de contact (on passe d'une interface aube/disque à deux interfaces aube/clinquant et clinquant/disque) et de réduire les mouvements relatifs entre les pièces en contact, et de réduire par la même les usures en fonctionnement.

Un exemple de clinquant connu, du type précité, est décrit dans le document FR 2890684. Ce clinquant est réalisé entièrement en métal, il s'agit d'une feuille métallique pliée de façon appropriée. WO96/41068 divulque un

L'invention a pour objectif de proposer une solution plus efficace que le clinquant connu précité, en terme de prestation "anti-usure", de manière à mieux protéger les portées des aubes et du disque.

Cet objectif est atteint grâce à un ensemble de rotor de turbomachine du type défini en introduction, dans lequel chaque branche est réalisée en un premier matériau présentant un premier module d'Young de valeur E, à une température de fonctionnement quelconque dans la plage de températures de clinquant selon le preambule de la revendication 1. fonctionnement du clinquant, cet ensemble de rotor comprenant des plaquettes adhérant aux portées du disque et/ou aux portées du pied d'aube, ces plaquettes étant réalisées en un deuxième matériau présentant un deuxième module d'Young de valeur comprise entre E/20 et E/5 à ladite température de fonctionnement.

On notera que le module d'Young d'un matériau varie en fonction de la température de ce matériau et que, par conséquent, la valeur E dépend de la température

Par températures de fonctionnement, on entend désigner les températures auxquelles le clinquant est soumis lorsque la turbomachine est en marche, dans des conditions normales d'utilisation. Conformément à l'invention, la relation entre lesdits premier et deuxième modules d'Young, définie ci-dessus, doit être vérifiée pour toutes les températures de la plage de températures de fonctionnement du clinquant.

Par exemple, lorsque le clinquant appartient à la soufflante ou au compresseur basse pression d'un turboréacteur d'avion double-corps, double-flux, sa température de fonctionnement varie entre 20 et 150°C. Lorsqu'il appartient au compresseur haute pression d'un turboréacteur d'avion double-corps, double-flux, sa température de fonctionnement varie entre 150 et 500°C. Lorsqu'il appartient à la turbine haute pression d'un turboréacteur d'avion double-corps, double-flux, sa température de fonctionnement varie entre 400 et 700 °C.

La présente invention est donc relative à l'adoption desdites plaquettes, réalisée en un matériau présentant des caractéristiques (isotropes ou anisotropes) d'élasticité supérieures à celles (isotropes ou anisotropes) du matériau constitutif du clinquant, dans la plage de fonctionnement thermique souhaitée.

Selon un mode de réalisation ledit premier matériau est un alliage métallique ou un matériau composite à matrice organique, tandis que ledit deuxième matériau est non métallique. Par exemple, et de façon non exhaustive, le deuxième matériau peut être en caoutchouc, en silicone, en polyimide, en verre, ou en résine époxy.

L'invention a pour effets:
- de répartir uniformément les pressions de contact par accommodation des plaquettes via l'élasticité du deuxième matériau;
- de limiter les mouvements relatifs des pièces, dus aux forces centrifuges lors d'un changement de vitesse de rotation, par cisaillement "statique" desdites plaquettes; et
- d'amortir les mouvements dynamiques éventuels de l'aube par cisaillement "dynamique" desdites plaquettes.

Ces effets ont, notamment, pour conséquence d'empêcher ou de limiter les phénomènes d'usure au niveau des portées et, ainsi, d'augmenter la durée de vie des pieds d'aube et des disques.

Ces effets sont renforcés lorsque le deuxième matériau a un comportement viscoélastique dans la plage de températures de fonctionnement du clinquant, plus particulièrement en ce qui concerne l'amortissement des mouvements dynamiques éventuels de l'aube.

L'invention a également pour objet une turbomachine comprenant un tel ensemble de rotor.

L'invention et ses avantages seront mieux compris à la lecture de la description détaillée qui suit. Cette description fait référence aux figures annexées sur lesquelles :
- la figure 1 représente partiellement, en vue éclatée et de manière schématique, un ensemble de rotor de turbomachine comprenant un disque de rotor, un exemple de clinquant selon l'invention, et un pied d'aube ;
- la figure 2 est une vue (partielle) en coupe radiale dans le plan II-II, de l'ensemble de rotor de la figure 1, une fois celui-ci assemblé ; et
- la figure 3 est une vue (partielle) en coupe analogue à celle de la figure 2 montrant un autre exemple d'ensemble de rotor selon l'invention.

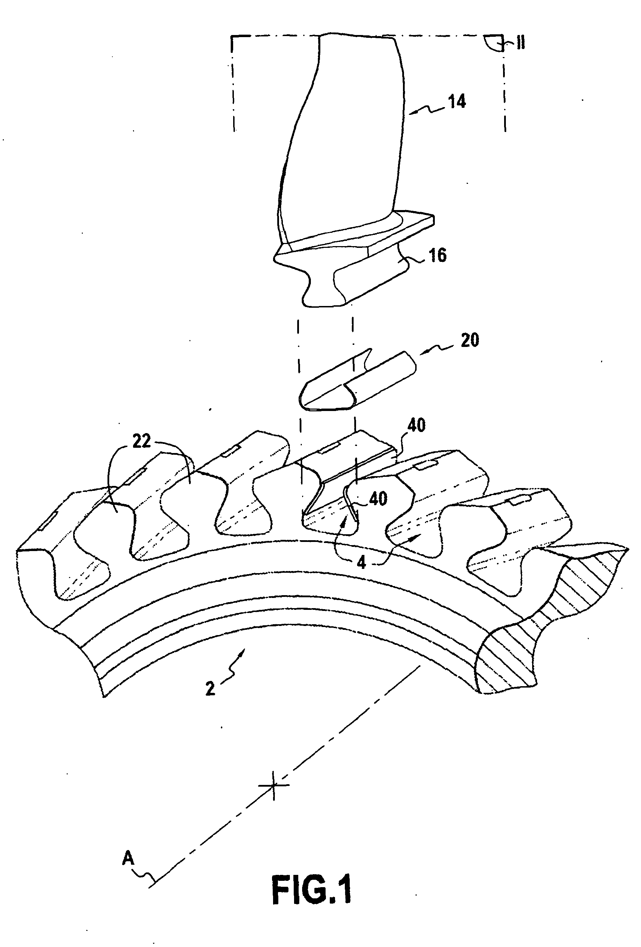

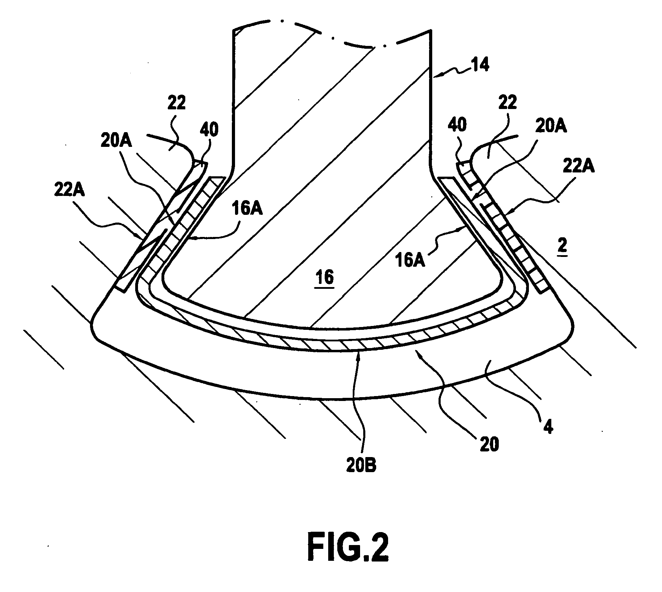

Sur les figures 1 et 2, sont représentés : un disque de rotor 2 présentant à sa périphérie de nombreuses rainures, ou alvéoles 4, définissant un logement susceptible de recevoir le pied 16 d'une aube 14, ce pied 16 étant entouré d'un clinquant 20. Le pied d'aube 16 et le disque de soufflante 2 sont réalisés, par exemple, en alliage de titane.

On notera qu'il existe des montages (non représentés) comprenant, en outre, une cale placée entre le pied d'aube 16 et le fond de l'alvéole 4.

Lors de la mise en rotation du disque 2, les aubes 14 sont soumises aux efforts centrifuges et les portées 16A des pieds d'aube 16 viennent se plaquer en butée contre les portées 22A du disque 2. Dans l'exemple, les portées 16A sont les flancs des pieds d'aube 16, tandis les portées 22A sont les faces inférieures des parties du disque en forme de lèvres 22 qui bordent l'ouverture extérieure des alvéoles 4.

Le clinquant 20 comprend deux branches latérales 20A destinées à venir contre les portées 16A du pied d'aube 16, et une base 20B (ici, en forme de plaque) reliant ces branches entre elles et s'étendant sous le pied d'aube 16. Chaque branche 20A est réalisée en un premier matériau présentant un premier module d'Young de valeur E, à une température quelconque dans la plage de températures de fonctionnement du clinquant. Le clinquant 20 est une pièce d'usure et a pour principale fonction de limiter l'usure du pied d'aube 16 et du disque de soufflante 2. Le clinquant 20 doit présenter une certaine rigidité afin d'assurer sa tenue mécanique et sa fonction anti-usure. Ainsi, la valeur E est, de préférence, supérieure ou égale à 110 000 MPa pour un clinquant métallique (par exemple : 210 000 MPa pour un clinquant en un superalliage de base Nickel, du type de ceux commercialisés sous la dénomination "Inconel") et supérieure ou égale à 70 000 MPa pour un clinquant en matériau composite à matrice organique.

Conformément à l'invention l'ensemble de rotor comprend des plaquettes 40 adhérant aux portées 22A du disque, ces plaquettes 40 étant réalisées en un deuxième matériau présentant un deuxième module d'Young de valeur comprise entre E/20 et E/5 à ladite température.

Selon d'autres exemples de réalisation (non représentés), des plaquettes sont fixées sur les portées 16A du pied d'aube, ou encore sur les portées 22A du disque et sur les portées 16A du pied d'aube.

Concernant le choix des matériaux, il est bien entendu fonction de la température de fonctionnement du clinquant.

Lorsque l'ensemble de rotor appartient à la soufflante ou au compresseur basse pression d'un turboréacteur d'avion double-corps, double-flux, il est soumis des températures de fonctionnement variant entre 20 et 150°C. Dans ce cas, à titre d'exemple, on peut choisir comme premier matériau un superalliage de base Ni avec plus de 15% en poids de Fe et de Cr, comme le superalliage commercialisé sous la dénomination "Inconel 718"; et comme deuxième matériau du caoutchouc (naturel ou synthétique). Dans ce même cas, on peut choisir comme premier matériau un matériau composite avec une matrice en résine époxy et des fibres de renfort, par exemple en carbone; et comme deuxième matériau une résine époxy seule (la différence de module d'Young entre le deuxième et le premier matériau étant liée à l'absence de fibres).

Lorsque l'ensemble appartient au compresseur haute pression d'un turboréacteur d'avion double-corps, double-flux, il est soumis à une température de fonctionnement variant entre 150 et 500°C. Dans ce cas, à titre d'exemple, on peut choisir comme premier matériau un superalliage de base Ni avec plus de 15% en poids de Fe et de Cr, comme le superalliage commercialisé sous la dénomination "Inconel 718"; et comme deuxième matériau un silicone ou un polyimide.

Lorsque l'ensemble appartient à la turbine haute pression d'un turboréacteur d'avion double-corps, double-flux, il est soumis à une température de fonctionnement variant entre 400 et 700 °C. Dans ce cas, à titre d'exemple, on peut choisir comme premier matériau un superalliage de base Ni avec plus de 15% en poids de Fe et de Cr, comme le superalliage commercialisé sous la dénomination "Inconel 718"; et comme deuxième matériau du verre (qui dans cette plage de température de fonctionnement a un comportement viscoélastique).

D'une manière générale, on notera que la fixation des plaquettes 40 sur les portées 22A du disque peut être obtenue de différentes manières et, notamment:
- par adhésion naturelle,
- lors de la polymérisation de la plaquette (lors de sa vulcanisation si elle est en caoutchouc),
- par collage,
ou en combinant plusieurs des techniques précitées.

Bien entendu, la fixation obtenue doit être suffisante pour empêcher les plaquettes 40 de se détacher des portées 22A en fonctionnement.

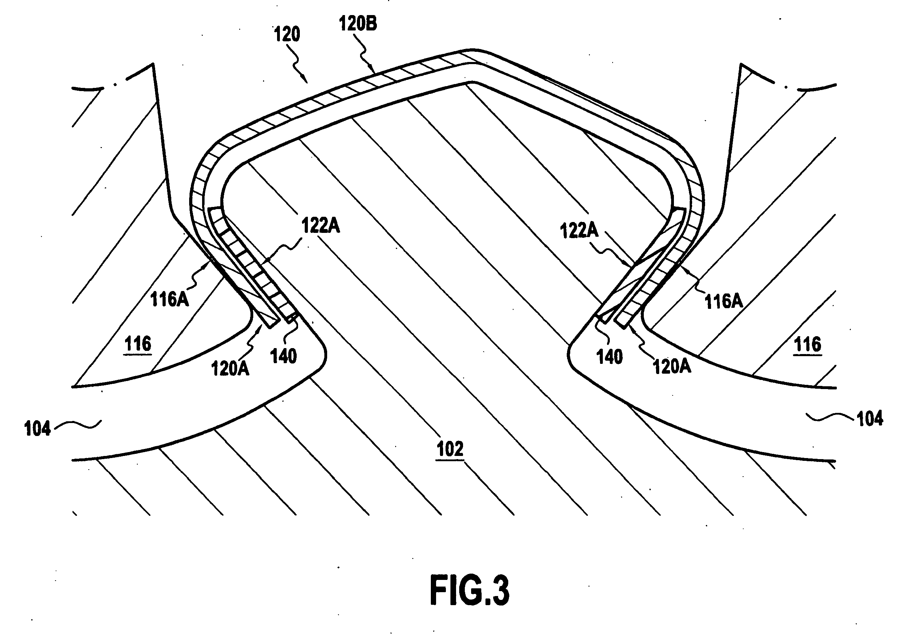

La figure 3 est une vue en coupe analogue à celle de la figure 2 montrant (partiellement) un autre exemple d'ensemble de rotor 120 selon l'invention. Les éléments ou parties d'élément analogues entre les figures 2 et 3 sont repérés par les mêmes références numériques augmentées de 100.

L'exemple de la figure 3 diffère de celui de la figure 2 en ce que la base 120B du clinquant 220 s'étend sur la périphérie externe du disque 202 de rotor, entre deux alvéoles 204 adjacentes, tandis que chaque branche 120A du clinquant rentre dans une alvéole 204 et se loge entre la portée 216A du pied d'aube 216 et la portée 222A correspondante du disque 202. La position des plaquettes 140 reste la même.

## Revendications

1. Ensemble de rotor de turbomachine comprenant : un disque (2) de rotor présentant sur sa périphérie externe des alvéoles (4); des aubes (14) fixées par leur pied (16) dans lesdites alvéoles (4); et des clinquants (20) montés entre les pieds d'aube (16) et le disque (2), chaque clinquant (20) comprenant deux branches (20A) et une base (20B) reliant ces branches entre elles, chaque branche (20A) étant disposée entre la portée (16A) d'un pied d'aube (16) et la portée (22A) correspondante du disque (2), et chaque branche (20A) étant réalisée en un premier matériau présentant un premier module d'Young de valeur E, à une température de fonctionnement quelconque dans la plage de températures de fonctionnement du clinquant (20), cet ensemble de rotor comprenant des plaquettes (40) adhérant aux portées (22A) du disque et/ou aux portées (16A) du pied d'aube, charactérisé en ce que les plaquettes (40) sont realisées en un deuxième matériau présentant un deuxième module d'Young de valeur comprise entre E/20 et E/5 à ladite température de fonctionnement.

2. Ensemble de rotor selon la revendication 1, dans lequel ledit premier matériau est un alliage métallique ou un matériau composite à matrice organique, tandis que ledit deuxième matériau est non métallique.

3. Ensemble de rotor selon la revendication 1 ou 2, dans lequel ledit deuxième matériau a un comportement viscoélastique dans la plage de températures de fonctionnement du clinquant.

4. Ensemble de rotor selon l'une quelconque des revendications 1 à 3, dans lequel la base (20B) de chaque clinquant (20) s'étend sous un pied d'aube (16).

5. Ensemble de rotor selon l'une quelconque des revendications 1 à 3, dans lequel la base (120B) de chaque clinquant (120) s'étend sur la périphérie externe du disque (102), entre deux alvéoles (104) adjacentes.

6. Turbomachine comprenant un ensemble de rotor selon l'une quelconque des revendications 1 à 5.

## Claims

1. A turbomachine rotor assembly comprising: a rotor disk (2) presenting slots (4) in its outer periphery; blades (14) fastened via their roots (16) in said slots (4); and shims (20) mounted between the blade roots (16) and the disk (2), each shim (20) comprising two branches (20A) and a base part (20B) interconnecting the branches, each branch (20A) being disposed between the bearing surface (16A) of a blade root (16) and the corresponding bearing surface (22A) of the disk (2), and each branch (20A) being made of a first material presenting a first Young's modulus of value E, at any operating temperature in the operating temperature range of the shim (20), said rotor assembly including pads (40) adhering to the bearing surfaces (22A) of the disk and/or to the bearing surfaces (16A) of the blade root, the assembly being **characterized in that** the pads (40) are made of a second material presenting a second Young's modulus of value lying in the range E/20 to E/5 at said operating temperature.

2. A rotor assembly according to claim 1, in which said first material is a metal alloy or an organic matrix composite material, while said second material is non-metallic.

3. A rotor assembly according to claim 1 or claim 2, in which said second material has viscoelastic behavior in the operating temperature range of the shim.

4. A rotor assembly according to any one of claims 1 to 3, in which the base part (20B) of each shim (20) extends under a respective blade root (16).

5. A rotor assembly according to any one of claims 1 to 3, in which the base part (120B) of each shim (120) extends over the outer periphery of the disk (102) between two adjacent slots (104).

6. A turbomachine including a rotor assembly according to any one of claims 1 to 5.

## Patentansprüche

1. Rotoranordnung einer Turbomaschine, umfassend eine Rotorscheibe (2), die an ihrem Außenumfang Zellen (4) aufweist, Schaufeln (14), die über ihren Fuß (16) in den Zellen (4) befestigt sind, sowie Zwischenstücke (20), die zwischen den Schaufelfüßen (16) und der Scheibe (2) angeordnet sind, wobei jedes Zwischenstück (20) zwei Schenkel (20A) und eine diese Schenkel untereinander verbindende Basis (20B) aufweist, wobei jeder Schenkel (20A) zwischen der Auflagefläche (16A) eines Schaufelfußes (16) und der entsprechenden Auflagefläche (22A) der Scheibe (2) angeordnet ist, und wobei jeder Schenkel (20A) aus einem ersten Werkstoff ausgebildet ist, der einen ersten Elastizitätsmodul mit dem Wert E, bei einer beliebigen Betriebstemperatur im Betriebstemperaturenbereich des Zwischenstücks (20) aufweist, wobei diese Rotoranordnung Platten (40) umfaßt, die an den Auflageflächen (22A) der Scheibe und/oder an den Auflageflächen (16A) des Schaufelfußes haften, **dadurch gekennzeichnet, daß** die Platten (40) aus einem zweiten Werkstoff ausgebildet sind, der einen zweiten Elastizitätsmodul mit einem Wert im Bereich zwischen E/20 und E/5 bei der Betriebstemperatur aufweist.

2. Rotoranordnung nach Anspruch 1, wobei der erste Werkstoff eine Metallegierung oder ein Verbundwerkstoff mit organischer Matrix ist, während der zweite Werkstoff ein nichtmetallischer Werkstoff ist.

3. Rotoranordnung nach Anspruch 1 oder 2, wobei der zweite Werkstoff ein viskoelastisches Verhalten in dem Betriebstemperaturenbereich des Zwischenstücks aufweist.

4. Rotoranordnung nach einem der Ansprüche 1 bis 3, wobei die Basis (20B) eines jeden Zwischenstücks (20) unter einem Schaufelfuß (16) verläuft.

5. Rotoranordnung nach einem der Ansprüche 1 bis 3, wobei die Basis (120B) eines jeden Zwischenstücks (120) sich über den Außenumfang der Scheibe (102), zwischen zwei benachbarten Zellen (104) erstreckt.

6. Turbomaschine, die eine Rotoranordnung nach einem der Ansprüche 1 bis 5 umfaßt.
